(19) Europäisches Patentamt
European Patent Office
Office européen des brevets

(11) **EP 2 699 464 B1**

## (12) EUROPEAN PATENT SPECIFICATION

(45) Date of publication and mention
of the grant of the patent:
**26.08.2015 Bulletin 2015/35**

(21) Application number: **12729199.5**

(22) Date of filing: **23.04.2012**

(51) Int Cl.:
***B61G 11/16*** *(2006.01)*          ***B61D 15/06*** *(2006.01)*
***F16F 7/12*** *(2006.01)*

(86) International application number:
**PCT/IB2012/052036**

(87) International publication number:
**WO 2012/143914 (26.10.2012 Gazette 2012/43)**

(54) **TRAIN PROVIDED WITH COLLAPSIBLE INTERFACES BETWEEN THE CARRIAGES**

ZUG MIT ZUSAMMENFALTBAREN SCHNITTSTELLEN ZWISCHEN DEN WAGEN

TRAIN POURVU D'INTERFACES PLIABLES ENTRE LES WAGONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2011 IT TO20110359**

(43) Date of publication of application:
**26.02.2014 Bulletin 2014/09**

(73) Proprietor: **Ansaldobreda S.p.A.
Napoli (IT)**

(72) Inventors:
• **RAITI, Stefano
55049 Viareggio (IT)**

• **LENZI, Luca
51034 Cantagrillo (IT)**

(74) Representative: **Lovino, Paolo et al
Studio Torta S.p.A.
Via Viotti, 9
10121 Torino (IT)**

(56) References cited:
**EP-A1- 0 529 433          EP-A1- 1 927 524
EP-A1- 2 168 838          WO-A1-2010/029188
DE-A1- 10 037 050          DE-A1- 10 042 221**

EP 2 699 464 B1

**Description**

<u>TECHNICAL FIELD</u>

The present invention relates to a train provided with collapsible interfaces between the carriages. In particular, hereinafter the term "train" is understood as referring to both a surface railway train, in particular a high-speed train, and an underground train.

<u>BACKGROUND ART</u>

The European patent application No. EP 1927524 A1, which corresponds to the preamble of Claim 1, describes a train, the carriages of which are coupled via interfaces provided with collapsible structures that undergo plastic deformation when they are compressed with a load higher than a given threshold to absorb energy in the case of head-on collision of the train and thus safeguard the integrity of the areas occupied by passengers and by the crew.

The collapsible structures referred to in the document No. EP 1927524 A1 provide, during their plastic deformation, a resistance to longitudinal compression that increases linearly with the increase in buckling. This solution makes it possible to distribute the absorption of the energy of impact all along the train.

The interfaces closest to the area of impact (and hence closest to the cab) are the ones most subjected to stress, unlike the ones further away (in the central and final areas of the train). On a given train, however, all the interfaces must be the same as one another, for the requirements of industrialization, interchangeability, and flexibility of configuration of the train itself. Consequently, the design and sizing of the interfaces must be carried out taking into account the specifications required of the first interface, i.e., the one that has to withstand the highest load, even if the collapsible structures of the subsequent interfaces will not be exploited for their entire absorption capacity.

As is known, in a train, the problems of space and weight are crucial. In particular, the area of boundary between adjacent carriages is very congested, in so far as, in a very narrow space, there must be housed the drawing/repulsion elements, the intercom, the electrical connections, the pneumatic connections, etc., moreover guaranteeing the necessary freedom of relative movement between the bodies during travel.

There is consequently felt the need to improve the solution described in EP 1927524 A1 in order to limit the maximum load acting, in the case of head-on or rear-end collision, on the first interface, which, as mentioned above, imposes the design requirements for all the subsequent interfaces.

<u>DISCLOSURE OF INVENTION</u>

The aim of the present invention is to provide a train having collapsible interfaces between the carriages that will enable the need set forth above to be met in a simple and inexpensive way.

According to the present invention a train is provided as defined in Claim 1.

<u>BRIEF DESCRIPTION OF THE DRAWINGS</u>

The invention will now be described with reference to the annexed drawings, which illustrate a non-limiting example of embodiment thereof and in which:

- Figure 1 is a side view of a preferred embodiment of a train provided with collapsible interfaces between the carriages, according to the present invention;
- Figure 2 is a side view, at an enlarged scale, of an interface of the train of Figure 1;
- Figure 3 illustrates, with parts removed for clarity and at a further enlarged scale, a detail of Figure 2;
- Figure 4 is a graph that represents the compressive strength as a function of buckling of a collapsible structure of the interface of Figure 2;
- Figures 5a and 5b are schematic representations of the plastic deformation of an absorber element of an interface of the train of Figure 1;
- Figure 6 is similar to Figure 2 and shows a variant of Figure 2; and
- Figures 7 and 8 are similar to Figures 1 and 2, respectively, and illustrate a further variant of the train of the present invention.

<u>BEST MODE FOR CARRYING OUT THE INVENTION</u>

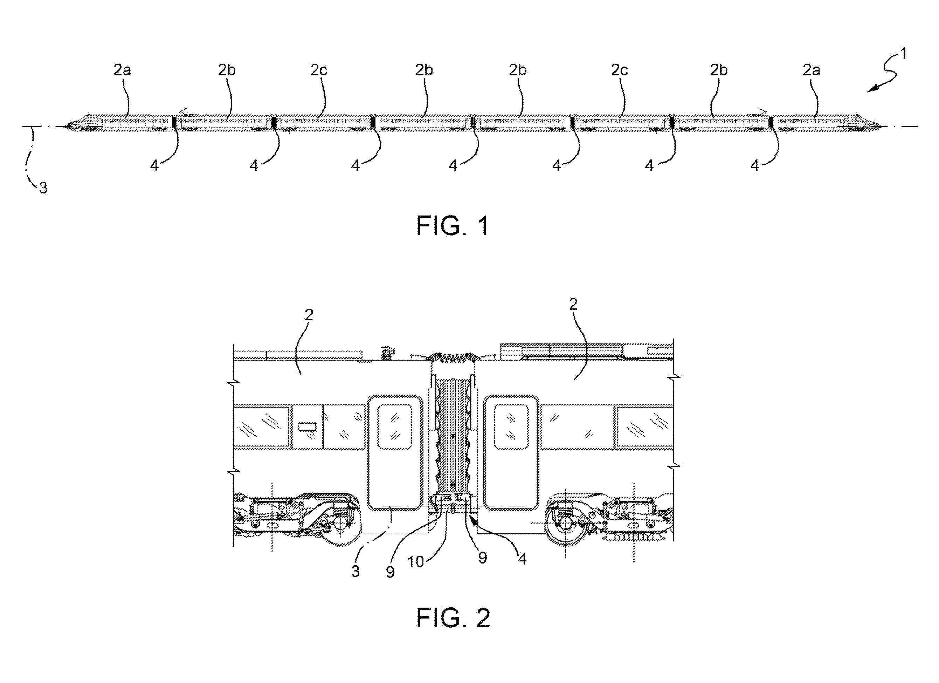

In Figure 1 designated by 1 is a high-speed train, constituted, in particular, by eight carriages 2 that are aligned along a longitudinal direction 3 and are coupled to one another via interfaces 4. The two carriages 2a set at the head and at the tail of the train are powered and are provided with a cab; four intermediate carriages 2b are drawn, and two intermediate carriages 2c are powered and are set between the drawn ones.

As regards passive safety in the case of head-on collision, the train 1 is designed so as to meet the directives referred to in the European standard EN 15227 aimed at preventing evident plastic deformation on driver's cabs, on passenger compartments, and on the end areas of each carriage 2 where the vestibules and the areas of access to the passenger compartments are located.

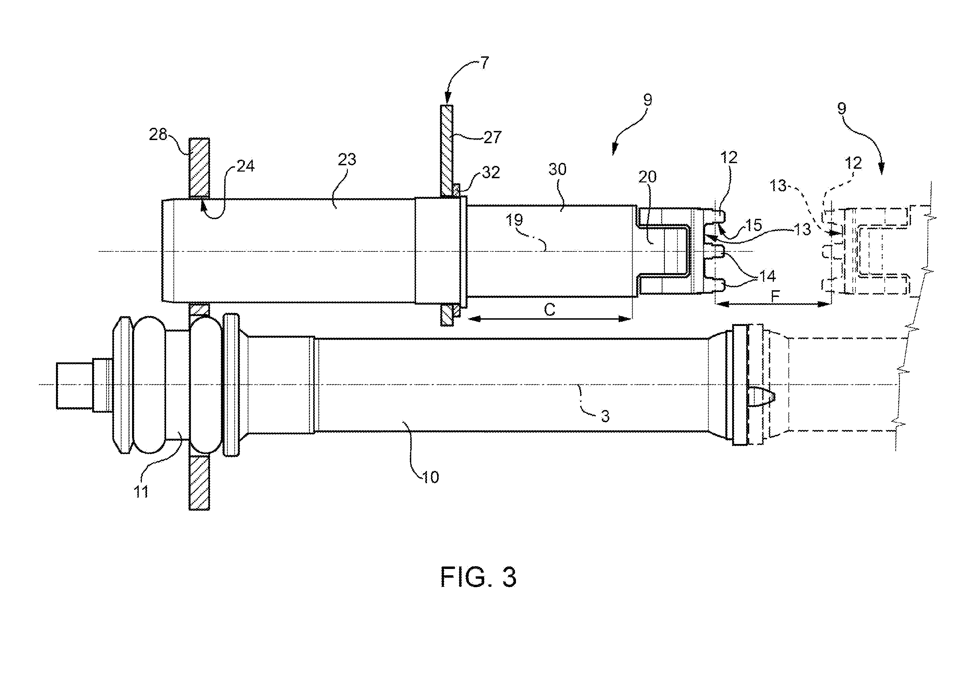

With reference to Figures 2 and 3, each interface 4 comprises two safety members 9, which are coupled, respectively, to the bodies (or load-bearing chassis) 7 of the two adjacent carriages 2, are set at a longitudinal distance apart during travel, for example at a distance F of approximately 70 mm, are substantially the same as one another and substantially symmetrical with respect to an ideal median plane orthogonal to the direction 3.

Each interface 4 further comprises a drawbar 10, which is set underneath the two members 9, transmits the tractive forces between the carriages 2 during travel, and is coupled to the bodies 7 via respective articulated joints 11, only one of which is shown in a simplified way in Figure 3. The articulated joints 11 enable a relative inclination between the bar 10 and the bodies 7 and, hence, the changes of direction on a bend of each carriage 2 with respect to the next.

Each member 9 comprises two absorber elements 18, which extend along respective axes 19 parallel to the direction 3, are set alongside one another in a horizontal direction (so that only one is visible in the figures), are the same as one another, and are symmetrical with respect to an ideal vertical plane in which the direction 3 lies. The four absorber elements 18 of each interface 4 define a collapsible structure that is able to undergo plastic deformation to absorb energy during a possible head-on collision or rear-end collision of the train 1 in order to guarantee safety of the passenger compartments.

The two members 9 further comprises respective anti-climber front elements 12, which are substantially rigid, extend in a direction transverse to the axes 19, and have respective surfaces 13 that face one another and are provided with horizontal ribs 14 defining a plurality of grooves 15 between them.

The two elements 18 of each member 9 comprise respective terminal attachment portions 20, coupled to the lateral ends of the element 12: in particular, the portions 20 are hinged to said lateral ends about respective vertical axes. At the opposite end with respect to the portions 20, the two elements 18 comprise respective bodies 23, which are substantially cylindrical and are housed, in fixed positions, in respective seats 24 defined by the body 7. In particular, each seat 24 is defined by two plates 27, 28, which lie in planes orthogonal to the axis 19, are axially set at a distance apart, and are reinforced in a way not illustrated.

The two elements 18 of each member 9 further comprise respective cylindrical bodies 30, which are coaxial to the bodies 23, extend on the outside of the corresponding body 7, and have a diameter smaller than that of the bodies 23.

Each member 9 then comprises two fixing plates or flanges 32, fitted in a fixed position on respective ends of the bodies 23 and fixed to the body 7, for example to the plate 27, by means of screws, for blocking the bodies 23 themselves.

In the case of head-on or rear-end collision of the train, in each interface 4, when the compression between the bodies 7 exceeds a given threshold, for example a threshold of $1.7 \cdot 10^6$ N, in the direction 3, the devices that connect the drawbar 10 to the bodies 7 break. The drawbar 10 consequently becomes free to slide with respect to at least one of the two carriages 2 and, consequently, its contribution as regards absorption of energy is negligible.

The two carriages 2 consequently approach one another, and the distance F drops to zero. At this point, the grooves 15 of one element 12 are engaged by the ribs 14 of the facing element 12: engagement between the grooves 15 and the ribs 14 of the two elements 12 prevents the two carriages 2 from rising with respect to one another.

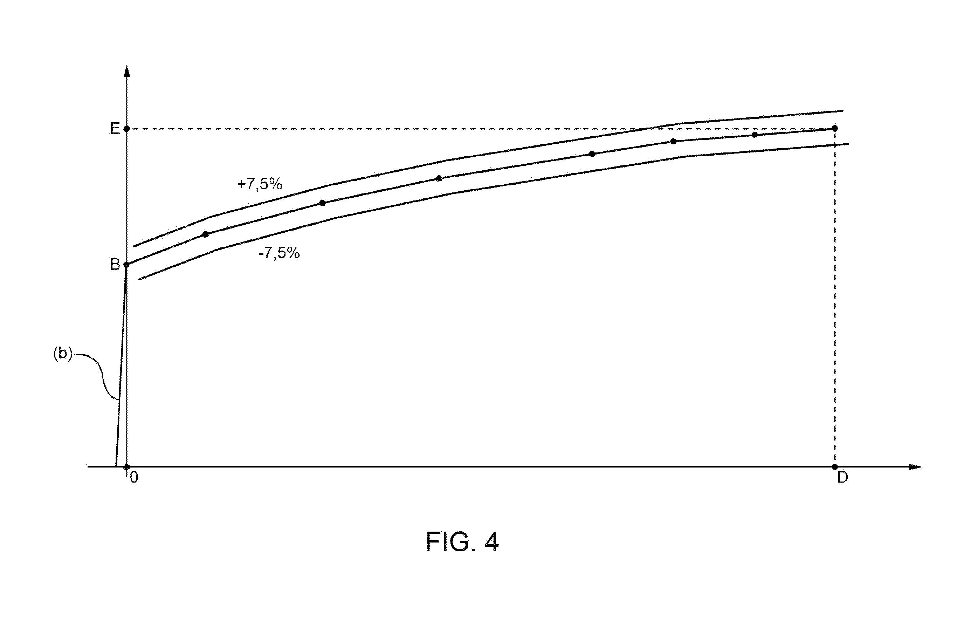

At the moment when the elements 12 come into mutual engagement, the compression between the two members 9 in a direction parallel to the direction 3 increases in a fast way, with a corresponding elastic deformation of a negligible amount (stretch of curve designated by (b) in the graph of Figure 4).

When the compression exceeds a given threshold B (for example $1.6 \cdot 10^6$ N), the bodies 30 start to recede within the bodies 23, as if they were pistons in respective cylinders, causing a plastic deformation that absorbs energy.

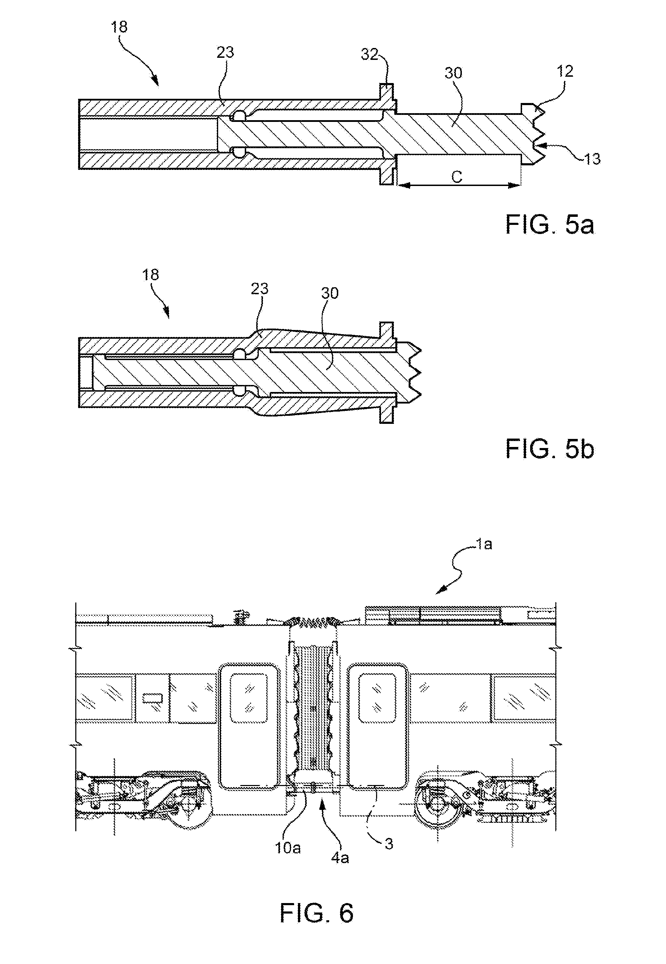

The travel of each body 30 corresponding to plastic deformation of the element 18 is also defined as "longitudinal buckling", and can reach a maximum value C (Figure 5a), defined by end-of-travel shoulders of the body 23, which stop axial recession of the body 30 (Figure 5b).

In each interface 4, the collapsible structure defined as a whole by the elements 18 offers, in a direction parallel to the direction 3, a compressive strength that increases as the longitudinal buckling increases, according to a theoretical stiffness curve that is set by design. The graph of Figure 4 illustrates said stiffness curve, which increases in monotonic manner, i.e., with a slope that is substantially always positive, from an initial point of co-ordinates (0; B) up to a final point of co-ordinates (D;E). In the final point of co-ordinates (D;E) the stiffness curve set by design could even have a horizontal tangent (zero slope).

In the case of a high-speed train, preferably we have:

D = approximately 610 mm;

B = approximately 1600 kN;

E = approximately 2700 kN;

The abscissa D depends upon the constructional features of the collapsible structure and, in the case of the embodiment of Figures 2 and 3, is twice the aforesaid maximum value C. Once again in the example of Figure 3, given that each member 9 has two elements 18 set in parallel, each element 18 undergoes plastic deformation in a range of load from 800 kN to 1350 kN.

The stiffness curve set by design during plastic deformation of the collapsible structure of a single interface 4 has a downward concavity, in all the points of the stiffness curve itself. In this way, not only is the maximum absorbable energy in each interface greater than a hypothetical linear stiffness curve (in so far as the area subtended by the curve is greater), but also a better distribution of the loads between the various interfaces 4 can be obtained, as will be explained in greater detail in what follows.

In actual fact, the compressive strength is determined by the characteristics of material, geometry, and dimensions of the collapsible structure of the interface 4. The features of the collapsible structure are hence designed so as to provide a compressive strength equal to that of the stiffness curve defined by design. In particular, the effective compressive strength, during a collision at a standard speed of impact, is allowed to present a maximum deviation of $\pm 7.5\%$ with respect to that of the stiffness curve set by design.

In the design stage, it is possible to adopt different alternative constructional solutions to obtain an effective compressive strength equal to that of the stiffness curve set by design. For example, as shown in Figure 5a, for each element 18, it is possible to adopt a tube, defined by the front part of the body 23, which receives a piston, defined by a cylindrical portion of the body 30, having an outer diameter greater than the inner diameter of the tube. Basically, the resistance that the tube opposes to insertion of the piston is a function of the material of the tube, of the diametral interference between the tube and the piston, and of the thickness of the tube itself. By appropriately varying the value of interference and/or the thickness of the tube in a progressive way throughout the travel of insertion of the piston, it is possible to obtain any law of stiffness. In the specific case, the thickness of the tube varies according to a law such as to obtain the stiffness curve set by design with a downward concavity.

After constructional design of the collapsible structure, i.e., of the elements 18, it is possible to carry out a test in order to derive the effective compressive strength during a plastic deformation and determine whether it corresponds to the one set by design. Said test preferably consists in a simulation via a purposely provided software.

In the case of a quasi-static test, i.e., simulating extremely low rates of deformation, the effective compressive strength is very close, if not identical, to that of the stiffness curve set by design. In the case of a test of a dynamic nature, i.e., simulating rates of deformation that correspond substantially to the actual ones in the case of collision, the effective compressive strength as a function of plastic deformation presents, in general, fluctuations around an average evolution, which must be substantially equal to the stiffness curve set by design. As mentioned above, the deviation with respect to the stiffness curve set by design must fall within the tolerance of $\pm 7.5\%$.

This design procedure enables controlled absorption of the energy associated to an impact.

In the design step, the stiffness curve can be set by points (as in Figure 4) and/or in the form of a polynomial equation, of a degree equal to or higher than two. For example, a fourth-degree polynomial equation suitable for the train 1 is the following:

$$y(x) = -9591 \cdot x^4 + 13511 \cdot x^3 - 8333 \cdot x^2 + 4030 \cdot x + 1600$$

where:

x [m] is the longitudinal buckling or plastic deformation of the collapsible structure (defined by the set of the elements 18) in an interface 4 (the abscissa x = 0 corresponds to the start of plastic deformation); and

y [kN] is the compressive strength in the longitudinal direction between the bodies 7 of the two adjacent carriages 2 during plastic deformation.

The following table shows the results of two software simulations, which regard, respectively, a head-on impact of a train according to the known art, in which the collapsible structure of the interfaces is plastically deformable with a linear stiffness curve, and a head-on impact of the train 1 with the stiffness curve shown in Figure 4. The co-ordinates (0;B) of the initial point and the co-ordinates (D;E) of the final point of plastic deformation are the same for the two stiffness curves being compared and are equal to the values referred to above.

The simulations were carried out by generating a FEM model according to the guidelines of the European standard EN 15227. In particular, the impact simulated was a head-on impact on a rectilinear stretch, with a vehicle launched at 36 km/h against an identical vehicle stationary and not braked. The model used was of the "one-dimensional" type, where the system made up of the various carriages 2 and the energy-absorption collapsible structures was modelled resorting to the use of masses and springs of appropriate stiffness. In particular, each body 7 was ideally divided into a central part and two end parts, which were modelled separately. Under these conditions, nonlinear analyses of an explicit type were conducted with the solver LS-Dyna of LSTC, version 970.

From a comparison of the results of the table, it emerges that, with a stiffness curve with a downward concavity in the plastic field, some of the interfaces furthest away from the impact zone (the third and the fifth ones) absorb an amount of energy greater than in the case of a linear stiffness curve. At the same time, the first two interfaces absorb a smaller amount of energy and hence undergo less stress given the same conditions and type of impact.

| Position of the interface | Energy absorbed on the interfaces [kJ] | | Variation [kJ] | Δ % |
|---|---|---|---|---|
| | Collapsible structure with linear stiffness curve | Collapsible structure with stiffness curve having a downward concavity | | |
| 1 | 1154 | 1120 | -34 | -2.9 |
| 2 | 1009 | 970 | -39 | -3.9 |
| 3 | 683 | 718 | +35 | +5.1 |
| 4 | 472 | 522 | -50 | -10.6 |
| 5 | 537 | 477 | +60 | +11.2 |
| 6 | 502 | 506 | -4 | -0.8 |
| 7 | 286 | 277 | -9 | -3.14 |

As compared to trains of the known art in which the collapsible structures of the interfaces have a linear stiffness curve, in the present invention the non-regeneratable deformation energy absorbed as a whole by the ensemble of the interfaces 4 of the train 1 proves to be lower: the reduction of said energy results in a higher elastic energy stored by the structures during collision.

Figure 6 shows a high-speed train 1a, in which each interface 4a is without the members 9, but has a drawbar 10a that does not detach from the bodies 7 in the event of impact, but comprises a collapsible structure not described in detail, designed so as to provide a compressive strength substantially equal to that of the stiffness curve defined by design. In other words, at least one absorber element is englobed in the drawbar 10, which consequently functions as drawing device and also as repulsion device between the bodies 7.

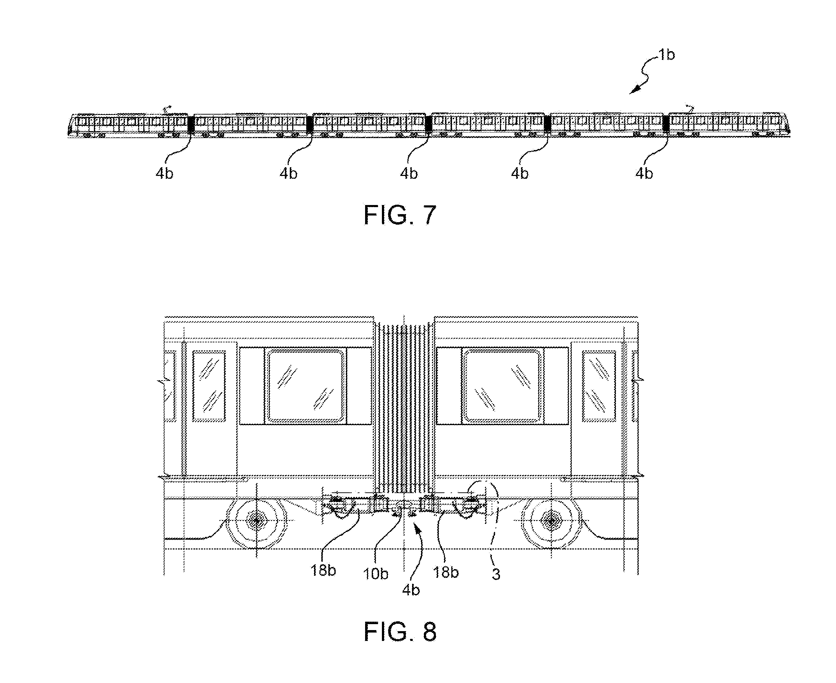

Figures 7 and 8 show an underground train 1b, which has only six carriages. In each interface 4b, the elements 18b are set of alongside the drawbar 10b, substantially at the same height from the ground. As regards the stiffness curve, in the case of an underground train, preferably we have:

D = approximately 400 mm;
B = approximately 500 kN;
E = approximately 1000 kN;

and a polynomial equation of the stiffness curve is, for example, the following:

$$y(x) = -8720 \cdot x^4 + 11550 \cdot x^3 - 7227 \cdot x^2 + 2821 \cdot x + 500$$

Also in this case, from the simulations conducted it emerges that the stiffness curve set by design with a downward concavity leads to an advantageous distribution of the energy absorption between the various interfaces 4b of the train 1b. The conditions of simulation are identical to those described above for the train 1, except for the values of the co-ordinates of the initial and final points of the stiffness curves and for the speed of impact, which in this case was set at 25 km/h.

| Position of the interface | Energy absorbed on the interfaces [kJ] | | Variation [kJ] | Δ % |
|---|---|---|---|---|
| | Collapsible structure with linear stiffness curve | Collapsible structure with stiffness curve having a downward concavity | | |
| 1 | 325 | 287 | -38 | -11.7 |
| 2 | 314 | 253 | -61 | -19.4 |
| 3 | 39 | 109 | +70 | +180.5 |
| 4 | 0 | 0 | 0 | 0 |
| 5 | 0 | 0 | 0 | 0 |

From a comparison of the results of the table, also in this case it is evident that, in the case of the train 1b, the first two interfaces absorb a lower energy and hence are subjected to less stress, given the same conditions and type of impact, as compared to the case of the known art in which the stiffness curve is linear in the plastic field. The third interface, instead, absorbs an amount of energy that is decidedly greater. The impact is at a speed such as to not affect substantially the fourth and fifth interfaces.

Also in this case, the non-restorable deformation energy absorbed as a whole by the ensemble of the interfaces 4b of the train 1b proves to be lower than in the underground train according to the known art, and the reduction of said energy results in a greater elastic energy stored in the structures during collision as compared to underground trains according to the known art.

From the foregoing it emerges clearly how the particular stiffness curve with a downward concavity set for designing the features of the collapsible structure in the interfaces 4, 4a, 4b enables a more even distribution of the load, i.e., of energy absorption, between the various carriages 2, in so far as it enables "lightening" of the work for the interfaces close to the impact, transferring part of absorption onto the interfaces that are further away.

Consequently, the first of the interfaces can be sized so as to absorb a lower amount of energy and hence withstand lower loads, without jeopardizing the overall effectiveness of absorption of the entire train 1, 1a, 1b. Since the interfaces are the same as one another and their design is based upon the absorption requirements to be met by the first one of them, the advantage is obtained of being able to reduce the dimensions and/or weight of all the collapsible structures present also in the intermediate interfaces, with a consequent considerable saving of overall weight and dimensions.

Finally, from the foregoing it emerges clearly that modifications and variations may be made to the train 1, 1a, 1b described herein, without thereby departing from the scope of protection of the present invention, as specified in the annexed claims.

In particular, as mentioned above, the constructional features of the absorber elements of the collapsible structure in the interfaces could be different from the ones illustrated purely by way of example; and/or said absorber elements could be set in positions different from and/or be of a number different from the ones indicated.

### Claims

1. A train (1;1a) comprising a plurality of carriages (2) aligned along a longitudinal direction (3) and coupled to one another via interfaces (4), which are the same as one another and comprise respective collapsible structures (18); each collapsible structure being plastically deformable up to a maximum buckling value (C) when the interface (4) is subjected to a longitudinal compression higher than a given threshold (B) and having features such as to offer, during plastic deformation, a compressive strength substantially equal to that of a stiffness curve, which is set by design and increases in monotonic manner up to the maximum buckling value (C) as a function of the longitudinal buckling;
   **characterized in that** said stiffness curve has a downward concavity, during plastic deformation, in all the points of said stiffness curve up to the maximum buckling value (C).

2. The train according to Claim 1, **characterized in that** said stiffness curve is defined by design by a fourth-degree polynomial equation.

**Patentansprüche**

1. Zug (1; 1a) mit einer Mehrzahl von Wägen (2), welche entlang einer Längsrichtung (3) ausgerichtet sind und miteinander über Schnittstellen (4) gekoppelt sind, welche einander gleichen und jeweils zusammenlegbare Strukturen (18) aufweisen, wobei jede zusammenlegbare Struktur plastisch bis zu einem maximalen Knickwert (C) verformbar ist, wenn auf die Schnittstelle (4) eine Längskompression wirkt, welche größer ist als ein gegebener Schwellwert (B) und Merkmale aufweist wie zum Beispiel eine Druckfestigkeit, welche während der plastischen Verformung im Wesentlichen der einer Steifigkeitskurve gleicht, welche durch die konstruktive Ausgestaltung vorgegeben ist und in einer monotonen Weise bis zu dem maximalen Knickwert (C) in Abhängigkeit des Längsknicks ansteigt;
   **dadurch gekennzeichnet, dass** die Steifigkeitskurve eine nach unten gerichtete Konkavität während der plastischen Verformung in allen Punkten der Steifigkeitskurve bis zu dem maximalen Knickwert (C) aufweist.

2. Zug nach Anspruch 1, **dadurch gekennzeichnet, dass** die Steifigkeitskurve durch konstruktive Ausgestaltung durch eine Polynomialgleichung vierten Grades bestimmt ist.

**Revendications**

1. Train (1, 1a) comprenant une pluralité de chariots (2) alignés dans une direction longitudinale (3) et accouplés les uns aux autres par le biais d'interfaces (4) qui sont identiques entre elles et qui comprennent des structures repliables (18) respectives ; chaque structure repliable étant déformable plastiquement jusqu'à une valeur de flambage maximale (C) lorsque l'interface (4) est soumise à une compression longitudinale supérieure à un seuil donné (B) et présentant des caractéristiques telles que celles d'offrir, lors de la déformation plastique, une résistance à la compression sensiblement égale à celle d'une courbe de raideur qui est définie par conception et qui augmente de façon monotone jusqu'à la valeur de flambage maximale (C) en fonction du flambage longitudinal ;
   **caractérisé en ce que** ladite courbe de raideur présente une concavité vers le bas, lors de la déformation plastique, en tous les points de ladite courbe de raideur maximale de la valeur de flambage maximale (C).

2. Train selon la revendication 1, **caractérisé en ce que** ladite courbe de raideur est définie par conception par une équation polynomiale du quatrième degré.

**FIG. 1**

**FIG. 2**

EP 2 699 464 B1

FIG. 3

FIG. 4

EP 2 699 464 B1

FIG. 5a

FIG. 5b

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1927524 A1